## Europäisches Patentamt

## European Patent Office

## Office européen des brevets

(19)

(11) Veröffentlichungsnummer: **0 141 026**
**B1**

(12) **EUROPÄISCHE PATENTSCHRIFT**

(45) Veröffentlichungstag der Patentschrift:
**07.10.87**

(21) Anmeldenummer: **84107164.0**

(22) Anmeldetag: **22.06.84**

(51) Int. Cl.⁴: **F 16 K  21/12, E 03 D  3/04**

(54) **Selbstschlussarmatur.**

(30) Priorität: **20.08.83  DE 3330135**

(43) Veröffentlichungstag der Anmeldung:
**15.05.85 Patentblatt 85/20**

(45) Bekanntmachung des Hinweises auf die Patenterteilung:
**07.10.87 Patentblatt 87/41**

(84) Benannte Vertragsstaaten:
**AT BE CH DE FR GB IT LI NL SE**

(56) Entgegenhaltungen:
**DE - C - 952 246**
**FR - A - 402 641**
**FR - A - 1 191 613**

(73) Patentinhaber: **DAL-Georg Rost & Söhne GmbH & Co.**
**Kommanditgesellschaft, Zur Porta 8-12, D-4952 Porta**
**Westfalica-Lerbeck (DE)**

(72) Erfinder: **Strangfeld, Reiner, Gartenstrasse 4a,**
**D-3062 Bückeburg (DE)**

(74) Vertreter: **Loesenbeck, Karl-Otto, Dipl.-Ing. et al,**
**Jöllenbecker Strasse 164, D-4800 Bielefeld 1 (DE)**

ACTORUM AG

## Beschreibung

Die Erfindung betrifft eine Selbstschlussarmatur mit hydraulischer Selbsthaltung gemäss Gattungsbegriff des Patentanspruches 1.

Derartige Selbstschlussarmaturen sind bekannt (DE-A-2852 006; DE-A-2946 558). Die Laufzeit wird durch eine entsprechend verlangsamte Öffnungsbewegung des Ventilkolbens bestimmt. Der unter anderem zur Hilfsventilsteuerung gehörende, axial im Ventilkolben geführte Steuerstössel wird dabei hydraulisch selbsthaltend in seiner Einschaltstellung (obere Stellung) fixiert. Dies bewirkt der zu den Selbsthaltegliedern gehörende, dem Steuerstössel zugeordnete und mit der Unterseite des Ventilkolbens zusammenwirkende Dichtungsteller in Verbindung mit einer ebenfalls dem Steuerstössel zugeordneten, als Drosselvorrichtung für den Armaturendurchfluss ausgelegten Drosselmanschette, die für den Aufbau einer selbsthaltenden Druckdifferenz sorgt.

Diese selbsthaltende Druckdifferenz ist allerdings nur dann gewährleistet, wenn nicht nur das aus der Entlastungskammer austretende Wasser, sondern eventuell auch an den Selbsthaltegliedern auftretende Leckströmungen drosselfrei zum Auslass geleitet werden. Ist dies nicht der Fall, verringert sich die an den Selbsthaltegliedern wirkende Druckdifferenz, und die Selbsthaltung könnte ungewollt unterbrochen werden.

Bezieht man sich auf den bekannten Stand der Technik, wäre als Abhilfe möglich, den in Auslassrichtung offenen Durchbruch im Steuerstössel zu vergrössern. Damit wird zwar die Selbsthaltephase problemlos. Nachteilig ist jedoch, dass dieser Querschnitt nach Unterbrechung der Selbsthaltung für den Armaturendurchfluss einen Bypass darstellt, der die zur Schliessfunktion erforderliche Zugwirkung der Drosselmanschette reduziert. Bei geringen Durchflüssen, z.B. bei stark verkalktem, nachgeschalteten Perlator, wird somit die Schliessbewegung des Ventilkolbens auch schon bei kleinem Bypass-Qerschnitt (DE-A-2852 006; DE-A-2946 558) unsicher und zwangsläufig noch unsicherer, je grösser dieser Querschnitt gewählt wird.

Der vorliegenden Erfindung liegt daher die Aufgabe zugrunde, eine Selbstschlussarmatur der gattungsgemässen Art zu schaffen, die sowohl über eine sichere Selbsthaltung als auch über eine sichere Schliessfunktion verfügt.

Die erfindungsgemässe Lösung ergibt sich aus dem kennzeichnenden Teil des Patentanspruches 1.

In der Selbsthaltephase der Hilfsventilsteuerung werden eventuell an den Selbsthaltegliedern auftretende Leckströmungen durch das dann offenstehende zusätzliche Ventil in der Strömungsverbindung zwischen den Selbsthaltegliedern und dem Auslass drosselfrei abgeleitet. Damit ist eine sichere Selbsthaltung gewährleistet. Nach Lösen der Selbsthaltung wird mit der dann eintretenden Relativbewegung der Hilfsventilsteuerung das zusätzliche Ventil geschlossen. Für den Armaturendurchfluss besteht nicht mehr die geringste By- pass-Möglichkeit, so dass er vollständig über die Drosselvorrichtung geleitet wird. Auch bei niedrigsten Durchflüssen wird damit eine absolut sichere Schliessbewegung des Ventilkolbens erreicht.

Ein besonders einfacher Aufbau einer derartigen Selbstschlussarmatur ist im Unteranspruch gekennzeichnet.

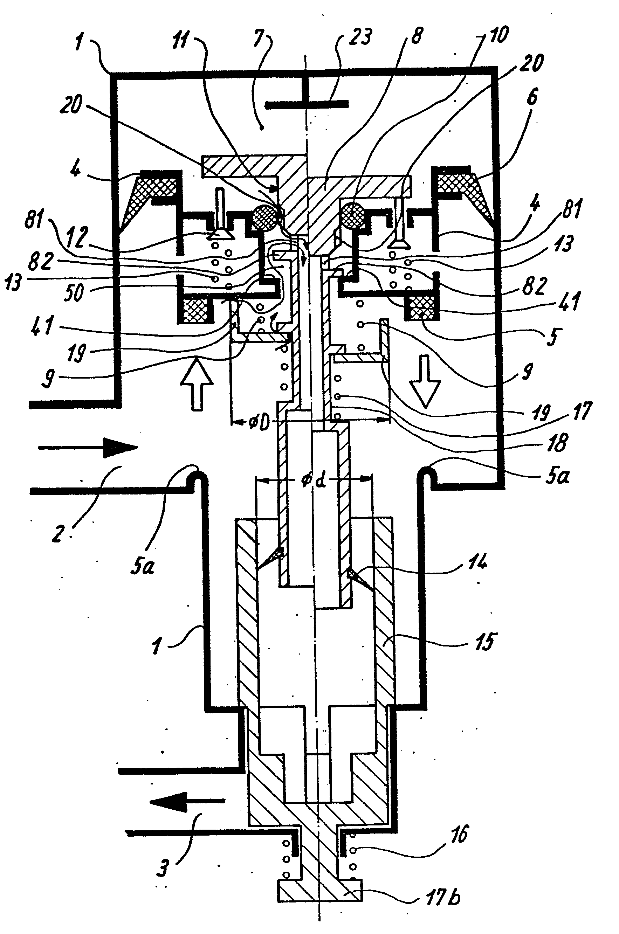

Ein Ausführungsbeispiel wird im folgenden anhand der Zeichnung beschrieben, die zwei schematisierte Teilschnitte darstellt.

In dem mit einem Wassereinlass 2 und einem Wasserauslass 3 versehenen Gehäuse 1 der Selbstschlussarmatur ist ein Ventilkolben 4 geführt, der mittels einer Dichtung 5 mit dem gehäuseseitig vorgesehenen Ventilsitz 5a zwischen dem Wassereinlass 2 und dem Wasserauslass 3 zusammenwirkt. Der Ventilkolben 4 definiert mit dem Gehäuse 1 mit Hilfe einer Manschettendichtung 6 eine Entlastungskammer 7.

Im dargestellten Ausführungsbeispiel ist mittig in dem Ventilkolben 4 und axial beweglich zu ihm als Teil seiner Hilfsventil-Steuerung ein Steuerstössel 8 gelagert, der oberseitig zur Bildung eines Betätigungsventiles der Selbstschlussarmatur mittels einer Schulter 11 mit einem vom Ventilkolben 4 getragenen Dichtungsring 10 zusammenwirkt, wobei er in der Schliessstellung der Armatur, in der er durch eine Druckfeder 9 in seine untere Stellung gedrückt ist, den Entlastungsraum 7 gegenüber dem Auslass 3 abdichtet. In dieser Schliessstellung drückt der Steuerstössel 8 mit seinem oberseitigen Flansch auch einen Ventilstössel 12 gegen die Kraft einer diesen beaufschlagenden Druckfeder 13 in eine Offenstellung, so dass in der Schliessstellung die Entlastungskammer zum Wassereinlass 2 hin offen ist.

Der Steuerstössel 8 trägt an seinem unteren Ende eine Drosselmanschette 14, die mit dem Aussenrand ihrer Lippe in der einen Durchmesser d aufweisenden Innenbohrung einer Steuerhülse 15 auf- und abbeweglich angeordnet ist. Die Steuerhülse 15 ist dabei über einem aus dem Gehäuse 1 herausgeführten Druckknopf 17 gegen die Kraft einer Feder 16 betätigbar, und man kann mit ihr aufgrund einer hier nicht näher interessierenden konstruktiven Ausgestaltung ihres unteren Innenbereiches in Verbindung mit der Ausgestaltung der entsprechenden Gehäusekontur im Bedarfsfall die hydraulische Selbsthaltung während der langsamen Öffnungsbewegung des Ventilkolbens 4 vorzeitig unterbrechen und die Armatur auf die schnelle Schliessbewegung umschalten.

Der Steuerstössel 8 trägt in einem Bereich unterhalb des Ventilkolbens 4 einen Dichtungsteller 19, der einen Aussendurchmesser D definiert. Der Dichtungsteller 19 ist in axialer Richtung der Selbstschlussarmatur flexibel, was im dargestellten Ausführungsbeispiel dadurch erreicht ist, dass er mit Spiel auf einem im Durchmesser reduzierten Abschnitt 18, des Steuerstössels 8 angeordnet ist und hier von einer Druckfeder 17 beaufschlagt ist, deren Federkraft grösser ist als diejenige Druckfeder 9, die den Steuerstössel 8 gegenüber dem Ventilkolben 4 abfedert.

Der verjüngte obere Schaftbereich des Steuerstössels 8 ist mit dem unteren hohlen Steuerstösselbereich, der einen zum Wasserauslass 3 hin offenen Strömungsquerschnitt bildet, über Stege verbunden, die Durchbrechungen zwischen sich bilden. Ferner weist der Steuerstössel 8 im Bereich einer von der Schulter 11 aus nach innen verlaufenden Einschnürung 21 eine kleine Nut 20 auf.

Es ist nun ein zusätzliches Ventil 50 zwischen dem Ventilkolben und dem Steuerstössel 8 gebildet, wozu im dargestellten Ausführungsbeispiel an dem Steuerstössel 8 unmittelbar unterhalb der zu seinem inneren Strömungsqerschnitt führenden Durchbrechungen 81 und damit unterhalb der kleinen Nut 20 ein umlaufender Bund 82 gebildet ist, der mit einem in der Durchbrechung des Ventilkolbens 4 für den Steuerstössel 8 geformten Sitz 41 im Sinne der Bildung dieses zusätzlichen Ventiles 50 zusammenwirkt.

Die Öffnungsstellung und die Schliessstellung dieses zusätzlichen Ventiles 50 ergeben sich aus den jeweiligen Relativstellungen des Ventilkolbens 4 und des Steuerstössels 8 zueinander.

Nach Betätigung der Selbstschlussarmatur mittels des Druckknopfes 17b hat die nach oben gedrückte Steuerhülse 15 auch den Steuerstössel 8 nach oben gedrückt, wodurch der Dichtungsteller 19 gegen die Unterseite des Ventilkolbens 4 gedrückt ist. Durch die gleichzeitig bewirkte Verschiebung der Schulter 11 des Steuerstössels 8 aus dem Dichtring 10 wird die kleine Nut 20 frei, so dass Wasser gemäss dem oberen geschlungenen Pfeil aus dem Entlastungsraum 7 ausströmen kann. Der Ventilkolben 4 steigt in einer durch den Nutquerschnitt vorgegebenen verlangsamten Öffnungsbewegung nach oben, weil sich die hierdurch ebenfalls bewirkte Schliesslage des Ventilstössels 12 einer Ergänzung des Wassers in der Entlastungskammer 7 entgegenstellt.

Das Wasser aus dem Wassereinlass 2 kann jedoch nicht ungedrosselt und ungehindert in den Wasserauslass 3 gelangen, sondern muss an der Drosselmanschette 14 entlangströmen. Das sich hieraus bildende Druckgefälle überträgt sich auch auf den Dichtungsteller 19. Die unterschiedlichen Durchmesser, D entsprechend dem Aussendurchmesser des Dichtungstellers 19 und d entprechend dem Innendurchmesser der Steuerhülse 15, haben im Zusammenwirken mit der Druckdifferenz zwischen der Oberseite des Dichtungstellers 19 und dessen Unterseite zur Folge, dass der Steuerstössel 8 über den Dichtungsteller 19 gegen die Kraft der Druckfeder 9 nach oben gedrückt wird.

In dieser Phase der hydraulischen Selbsthaltung ist das von dem Bund 82 und dem Sitz 41 gebildete zusätzliche Ventil 50 offen. Somit können aber auch etwaige Leckströme zwischen dem Dichtungsteller 19 und der Unterseite des Ventilkolbens 4 und ein etwaiger Leckstrom zwischen der abgefederten Abstützung des Dichtungstellers 19 am Steuerstössel 8 hindurch (siehe gewundene untere Pfeile) in den ungedrosselten freien Strömungsquerschnitt im Inneren des Steuerstössels 8 zum Wasserauslass 3 hin abströmen.

Bei Erreichen des Endes des normalen, durch die kleine Nut 20 als Zeitglied vorgegebenen Spülvorganges läuft der Steuerstössel 8 gegen einen Anschlag 23, wodurch er relativ zum Ventilkolben 4 nach unten gedrückt wird und der Dichtungsteller 19 von der Unterseite des Ventilkolbens 4 fortgedrückt wird. Damit ist die selbsthaltende Druckdifferenz aufgehoben, und der Steuerstössel 8 schaltet vollends in seine untere Lage zurück. Hierdurch wird auch der Ventilstössel 12 in seine Offenstellung gedrückt, so dass zwischen dem Wassereinlass 2 und der Entlastungskammer 7 ein relativ grosser Durchflussquerschnitt frei ist. Die Armatur schliesst sich in einer relativ schnellen Abwärtsbewegung des Ventilkolbens 4. Der Schliessvorgang der Armatur verläuft im wesentlichen ebenso, wenn über eine erneute Betätigung des Druckknopfes 17b die Selbsthaltung vorzeitig unterbrochen und die Armatur vorzeitig auf die Schliessbewegung umgeschaltet wird.

Dadurch, dass der Steuerstössel 8 sich relativ zum Ventilkolben 4 nach unten bewegt, ist das zusätzliche Ventil 50 geschlossen, weil jetzt der Bund 82 auf dem Sitz 41 aufliegt. Damit ist aber der Bypass durch den Strömungsquerschnitt im Inneren des Steuerstössels 8 zum Wasserauslass 3 gesperrt und der gesamte Armaturendurchfluss muss über die Drosselmanschette 14 abfliessen, so dass selst bei nur sehr geringen Durchflussmengen die zur Schliessfunktion nötige Zugwirkung der Drosselmanschette 14 gewährleistet ist.

## Patentansprüche

1. Selbstschlussarmatur mit einem einen Einlass (2) und einen Auslass (3) aufweisenden Gehäuse (1), einem darin geführten Ventilkolben (4), dessen vom Ventilsitz (5a) abgewandte Seite mit dem Gehäuse eine Entlastungskammer (7) begrenzt, die mit dem Einlass (2) und dem Auslass (3) über Strömungsdurchgänge (12, 20) verbunden ist, die derart gegenläufig Hilfsventil-gesteuert sind, dass die Laufzeit durch eine verlangsamte Öffnungsbewegung des Ventilkolbens (4) bestimmt wird, und der Abschluss durch eine schnelle Schliessbewegung des Ventilkolbens (4) erreicht wird, wobei die während der Öffnungsbetätigung des Ventilkolbens (4) gegebene Einschaltstellung der Hilfsventilsteuerung durch eine mit dem Armaturendurchfluss an einer Drosselvorrichtung (14) aufgebaute Druckdifferenz hydraulisch selbsthaltend ausgeführt ist und ein Unterbrechen dieser Selbsthaltung die Hilfsventilsteuerung umschaltet, dadurch gekennzeichnet, dass an den Selbsthaltegliedern (4; 8; 19) eventuell auftretende Leckströmungen über ein mit der Einschaltstellung der Hilfsventilsteuerung geöffnetes zusätzliches Ventil (82; 41; 50) drosselfrei zum Auslass (3) abgeleitet werden, und dieses zusätzliche Ventil (82; 41; 50) nach Unterbrechung der Selbsthaltung und der damit gegebenen Umschaltung der Hilfsventilsteuerung schliesst, so dass für den Armaturendurchfluss eine parallel zur Strömung über die Drosselvorrichtung (14) mögliche Bypass-Strömung vermieden wird.

2. Selbstschlussarmatur nach Anspruch 1, dessen Hilfsventilsteuerung unter anderem aus einem axialmittig in dem Ventilkolben (4) geführten Steuerstössel (8) besteht, der sowohl einen mit der Unterseite des Ventilkolbens (4) zusammenwirkenden, für die Selbsthaltung sorgenden Dichtungsteller (19) als auch an seinem unteren Ende eine als Drosselvorrichtung für den Armaturendurchfluss wirkende Drosselmanschette (14) trägt sowie über Durchbrüche (81) verfügt, die in der Selbsthaltephase die zwischen Ventilkolben (4), Dichtungsteller (19) und Steuerstössel (8) gebildete Kammer über die Innenbohrung des Steuerstössels (8, 18) mit dem Auslass (3) verbindet, dadurch gekennzeichnet, dass am Steuerstössel (8) unterhalb seiner relativ grossen Durchbrüche (81) ein Teller (82) angeordnet ist, der mit dem Sitz (41) des Ventilkolbens (4) zusammenwirkt, wobei diese Elemente das zusätzliche Ventil (50) bilden.

## Claims

1. A self-closing fitting comprising a housing (1) having an inlet (2) and an outlet (3), a valve piston (4) which is guided in the housing and whose side which is remote from the valve seat (5a) defines with the housing a load relief chamber (7) which is connected with the inlet (2) and the outlet (3) by way of flow passages (12, 20) which are controlled by an auxiliary valve means in opposite relationship in such a way that the operating time is determined by a slowed-down opening movement of the valve piston (4) and closure is achieved by a rapid closing movement of the valve piston (4) wherein the cut-in positioning of the auxiliary valve control, which is produced during the opening actuation of the valve piston (4), is effected hydraulically in a self-holding manner by a pressure difference which is built up with the fitting through flow at a throttle means (14) and an interruption in the self-holding action switches over the auxiliary valve control, characterised in that any leakage flows which may occur at the selfholding members (4, 8, 19) are drained off in a throttle-free manner to the outlet (3) by way of an additional valve (82, 41, 50) which is opened with the cut-in positioning of the auxiliary valve control, and said additional valve (82, 41, 50) closes after interruption in the self-holding action and the resulting switching over of the auxiliary valve control so that a by-pass flow which is possible in parallel relationship to the flow by way of the throttle means (14) is avoided, for the fitting through flow.

2. A self-closing fitting according to claim 1 in which the auxiliary valve control comprises inter alia a control push rod member (8) which is guided in central axial relationship in the valve piston (4) and which has a sealing plate (19) cooperating with the underside of the valve piston (4) and providing for the self-holding action and also at its lower end a throttle ring (14) acting as a throttle means for the fitting through flow, the push rod member also having apertures (81) which in the self-holding phase communicates the chamber formed between the valve piston (4), the sealing plate (19) and the control push rod member (8) with the outlet (3) by way of the internal bore in the control push rod member (8, 18), characterised in that arranged on the control push rod member (8) beneath its relatively large apertures (81) is a plate (82) which co-operates with the seat (41) of the valve piston (4), said elements forming the additional valve (50).

## Revendications

1. Appareil de robinetterie à fermeture automatique, avec un corps (1) présentant une admission (2) et une évacuation (3), avec un piston à soupape (4) guidé à l'intérieur du corps, dont le côté éloigné du siège de soupape (5a) délimite avec le corps une chambre d'équilibrage (7) qui est reliée à l'admission (2) et à l'évacuation (3) par l'intermédiaire de passages d'écoulement (12, 20) qui sont commandés à contre-sens par soupape auxiliaire de telle sorte que la durée de fonctionnement est déterminée par un mouvement d'ouverture prolongé du piston à soupape (4), et que l'arrêt est obtenu par un rapide mouvement de fermeture du piston à soupape (4), la position de marche de la commande à soupape auxiliaire obtenue pendant l'actionnement d'ouverture du piston à soupape (4) étant réalisée hydrauliquement avec auto-entretien par une différence de pression établie par le flux traversant l'appareil au niveau d'un dispositif d'étranglement (14), et une interruption de cet auto-entretien engendrant la commutation de la commande à soupape auxiliaire, caractérisé en ce que les écoulements de fuite apparaissant éventuellement au niveau des éléments d'auto-entretien (4; 8; 19) sont déviés sans étranglement vers l'évacuation (3) par l'intermédiaire d'une soupape supplémentaire (82; 41; 50) ouverte par la position de marche de la commande à soupape auxiliaire, et en ce que cette soupape supplémentaire (82; 41; 50) se ferme à la suite de l'interruption de l'auto-entretien et de la commutation ainsi obtenue de la commande à soupape auxiliaire, de sorte qu'est évité pour le flux traversant l'appareil un possible écoulement de dérivation parallèlement à l'écoulement passant par le dispositif d'étranglement (14).

2. Appareil de robinetterie à fermeture automatique selon la revendication 1, dont la commande à soupape auxiliaire est constituée entre autres par un poussoir de commande (8) guidé en position axialement centrale dans le piston à soupape (4), poussoir qui porte tant une rondelle d'étanchéité (19) coopérant avec le côté inférieur du piston á soupape (4) et assurant l'auto-entretien, que, à son extrémité inférieure, une manchette d'étranglement (14) jouant le rôle de dispositif d'étranglement pour le flux traversant l'appareil, et poussoir qui dispose d'ajours (81) qui, dans la phase d'auto-entretien, relient à l'évacuation (3),

par l'intermédiaire de l'alésage intérieur du poussoir de commande (8, 18), la chambre formée entre le piston à soupape (4), la rondelle d'étanchéité (19) et le poussoir de commande (8), caractérisé en ce qu'une rondelle (82) est disposée sur le poussoir de commande (8) en dessous de ses ajours (81) de relativement grande taille, rondelle qui coopère avec le siège (41) du piston à soupape (4), ces éléments constituant la soupape supplémentaire (50).